# EUROPEAN PATENT SPECIFICATION

(11) **EP 0 547 801 B1**
(45) Date of publication and mention of the grant of the patent: **02.08.1995**
(21) Application number: 92310950.8
(22) Date of filing: 01.12.1992
(51) Int. Cl.: B23H 9/14, B23H 1/10

(54) **Electrical discharge boring apparatus**
Funkenerosionbohrvorrichtung
Dispositif de forage par électroerosion

(30) Priority: 17.12.1991 JP 361040/91
(43) Date of publication of application: 23.06.1993
(73) Proprietor: SODICK CO., LTD., Yokohama Kanagawa 222 (JP)
(72) Inventor: Abiko, Satoshi, c/o Sodick Co.,Ltd., Iwate-gun, Iwate 028-41 (JP); Onodera, Toru, c/o Sodick Co.,Ltd., Iwate-gun, Iwate 028-41 (JP)
(74) Representative: Kensett, John Hinton

(56) References cited:
- US-A- 3 468 784
- PATENT ABSTRACTS OF JAPAN vol. 10, no. 372 (M-544)(2429) 11 December 1986 & JP-A-61 164 731 (INOUE JAPAX RES INC) 25 July 1986
- PATENT ABSTRACTS OF JAPAN vol. 5, no. 203 (M-103)(875) 23 December 1981 & JP-A-56 119 333 (MITSUBISHI DENKI K.K.) 18 Septembre 1981
- PATENT ABSTRACTS OF JAPAN vol. 010, no. 010 (M-446)16 January 1986 & JP-A-60 172 423 (FANUC K.K.) 5 Septembre 1985

## Description

The present invention relates to an electrical discharge boring apparatus for forming a relatively small hole in a workpiece to be machined at high speeds.

In order to bore a relatively small hole in a workpiece at high speed by means of electrical discharges, a relatively long tubular electrode of a few millimetres or less in diameter is widely used. A machining current of extremely high current density (e.g. 1000 A/cm² or more) is applied to the machining gap while spouting a working fluid from the tubular electrode inside at a pressure (e.g. 20 kg/cm² or more). In this type of electrical discharge boring apparatus, the workpiece can be machined at a feed rate (e.g. 20mm/min or more) of several to more than ten times as large as that of the usual die-sinking electric discharge machine with a low electrode wear rate. Due to the availability of such high speed machining performance, high speed electrical discharge boring is widely applied even for the machining of small sized parts instead of, for example, drilling.

No. JP-A-60-172423 discloses an electrical discharge boring apparatus for attachment to a wire-cut electroerosion machine using a tubular electrode through which a working fluid flows into a machining gap to produce a so-called initial hole for threading a wire electrode in a workpiece.

JP-A-61-164731 discloses an apparatus for machining a small hole using a wire electrode.

In an electrical discharge boring operation the workpiece material is meltingly removed by electrical discharges as machined chips. These chips adhere to the peripheral edge of the opening of a machined hole and form a fused adhesive substance like sputters resulting in impairment of the finished quality of the workpiece. They have to be removed by hand. This is cumbersome, particularly when machining small sized parts.

It is well known that the build-up of the fused adhesive substance is dependent on the discharge machining parameters. When boring a small hole at greater feed rate with larger machining energy, a greater amount of fused adhesive substance is built up. If the discharge machining energy is lowered to restrain this build-up, the high speed performance, which was the greatest advantage of this type of electrical discharge boring apparatus is reduced.

Conventionally, it has been required to remove the fused adhesive substance by other processes after the completion of the high speed electrical discharge boring, thus resulting in reduced machining efficiency and increased cost.

According to the present invention there is provided an electrical discharge boring apparatus for boring a small hole in a workpiece comprising means for repeatedly applying a machining pulse to a machining gap formed between the workpiece and a machining tubular electrode through said tubular electrode, means for supplying a working fluid into the machining gap, and means for causing a predetermined relative feed motion to the tubular electrode, characterised in that a working fluid jet nozzle means is provided which is adapted to spout the working fluid toward the peripheral edge of the inlet-side opening of the machined hole formed by said tubular electrode, the working fluid jet nozzle means comprising a body formed as a tubular member and having radial passages extending from the peripheral cylindrical surface of the tubular member to its bottom surface, said passages opening at said bottom surface to form respective nozzles, and communicating at their respective other ends with the working fluid supply means, and wherein the working fluid supply means is adapted to supply the working fluid to said jet nozzle means under a sufficient pressure such that the pressure of fluid at the nozzles is at least 20 kg/cm².

Embodiments of the present invention will now be described, by way of example only, with reference to the accompanying drawings, in which:
Figure 1 is a schematic drawing showing a configuration of one embodiment of an electrical discharge boring apparatus according to the invention;
Figure 2 is an enlarged fragmentary sectional view showing a major part of the electrical discharge boring apparatus shown in Figure 1;
Figure 3 is a cross sectional view showing the working fluid jet nozzle device through A-A in Figure 2;
Figure 4 is a cross sectional view showing an example of the working fluid jet nozzle device used for the electrical discharge boring apparatus according to the invention; and
Figure 5 is a cross sectional view showing another example of the working fluid jet nozzle device used for the electrical discharge boring apparatus according to the invention.

Reference will now be made in detail to the preferred embodiment of the invention, an example of which is illustrated in the accompanying drawings.

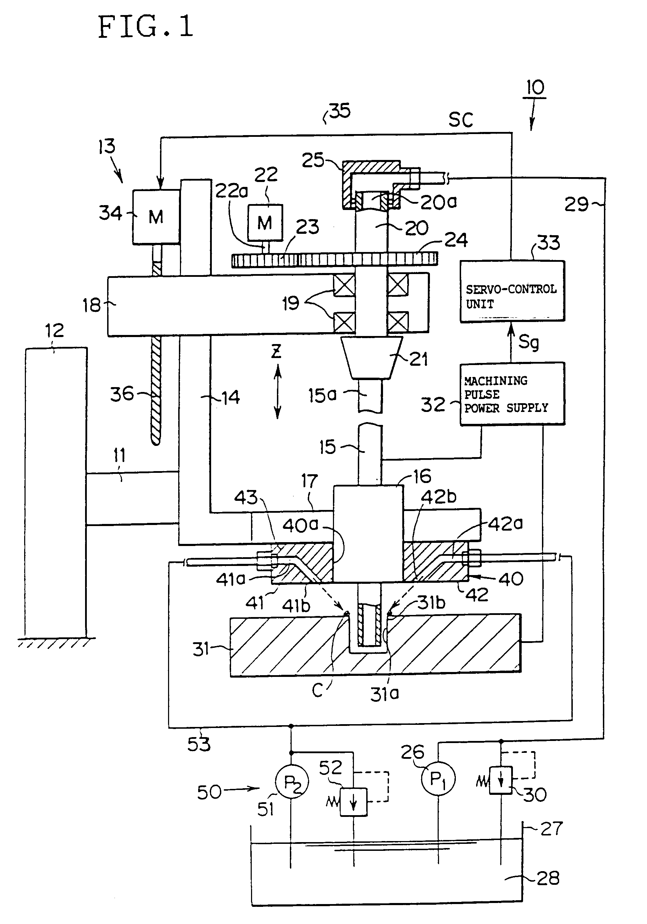

Figure 1 shows one embodiment of an electrical discharge boring apparatus according to the invention. An electrical discharge boring apparatus 10 is provided with a head 13 fixedly disposed on a main frame 12 by a bracket 11.

The head 13 includes an L-shaped guide frame 14 fixed to the bracket 11, and a conventional electrode guide 16 for guiding a machining tubular electrode 15 is fixed to one end of the guide frame 14 by a suitable means through a guide holder 17. A base end 15a of the tubular electrode 15 is gripped by a chuck 21 disposed to the lower end of a hollow spindle 20 being rotatably supported by bearings 19 provided in a movable arm 18. The movable arm 18 is guided by the guide frame 14 so that it can move along the Z axis, i.e., in the axial direction of the tubular electrode 15.

In order to rotate the tubular electrode 15 gripped by the chuck 21, a spur gear 24 engaging with a pinion 23 fixedly secured on an output shaft 22a of a motor 22 is mounted on the hollow spindle 20. The hollow spindle 20 is decelerated and rotated by the motor 22.

In order to supply a working fluid to a space 20a of the rotating hollow spindle 20, a rotary joint 25 is secured on the upper part of the hollow spindle 20. A working fluid 28 in a supply tank 27 is pressurized by a pressing pump 26 to feed into the rotary joint 25 through a feed pipe 29. In the chuck 21, the hollow spindle 20 and the tubular electrode 15 are jointed together so that the pressurized working fluid being supplied in the hollow space of the hollow spindle 20 is fed into the hollow space of the tubular electrode 15, and the pressurized working fluid spouts from the lower opening of the tubular electrode 15 toward a workpiece 31. A relief valve 30 is provided to protect the working fluid feeding systems including the pressing pump 26.

The workpiece 31 to be machined is fixed to a work table, not shown, by a suitable means. A machining voltage pulse is applied across a machining gap between the workpiece 31 and the tubular electrode 15 from a machining pulse power supply 32. An electrode feeding device 35 comprising a servo-control unit 33 and a feeding motor 34 is arranged to perform electrical discharge machining in the machining gap by the machining voltage pulse.

The feeding motor 34 is coupled to a feed screw 36 cooperating with the movable arm 18 to form an electrode feed device 35. The feeding motor 34 acts in response to a servo-control signal SC delivered from the servo-control unit 33 based on a signal Sg representative of a machining gap status fed from the machining pulse power supply 32. A feed rate of the tubular electrode 15 is then controlled, and the machining gap is always maintained in a suitable distance during machining operation.

Further, the electrical discharge boring apparatus 10 according to the invention is provided with a working fluid jet nozzle device 40 to restrain the build-up of a fused adhesive substance of machined chips to a peripheral edge 31b of the opening of a machined hole 31a formed in the workpiece. In this embodiment, the working fluid jet nozzle device 40 is fixed to a guide holder 17 disposed around the electrode guide 16 by a suitable means, e.g., screwing, and provided with first and second nozzles 41 and 42.

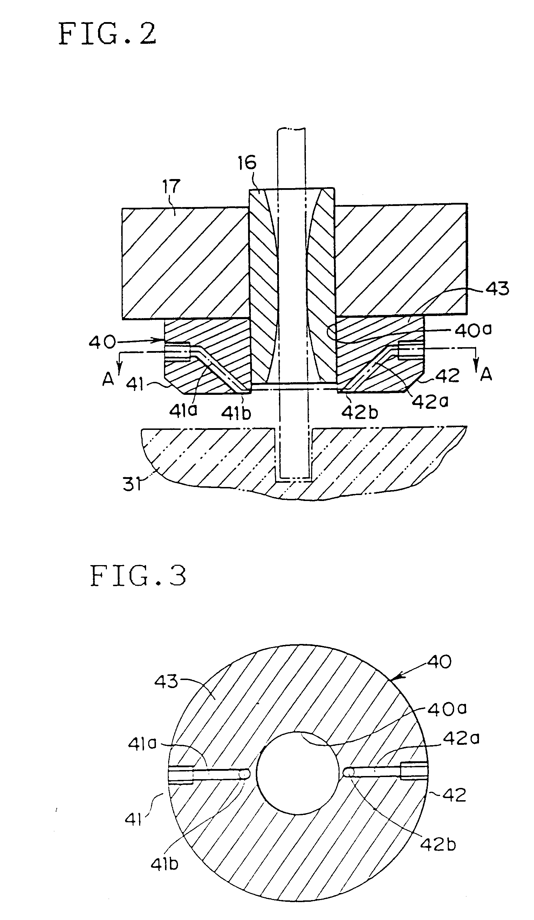

In Figures 2 and 3, there is shown the working fluid jet nozzle device 40 in details by sectioning. As will be apparent from Figures 2 and 3, the working fluid jet nozzle device 40 has a body 43 formed as a thick-walled tubular member with a hole 40a whereinto the electrode guide 16 is inserted at its central position. The first and second nozzles 41 and 42 formed in the body 43 are provided 180° apart, including passages 41a and 42a, respectively. Therefore, the fluid pressures applied by the working fluid jet nozzle device 40 to the tubular electrode 15 from two directions are mutually cancelled, and such a force that may deform the tubular electrode 15 will not be applied to the tubular electrode 15.

The passage 41a of the first nozzle 41 is communicated at its one end to a device 50 for pressurizing and supplying a working fluid through a feed pipe 53, while the other end 41b of the passage 41a acts as a working fluid jet nozzle. Also the passage 42a of the second nozzle 42 is communicated at its one end to the device 50 through the feed pipe 53, while the other end 42b of the passage 42a acts as a working fluid jet nozzle. A diameter of each nozzle end opening may be preferably equal to or slightly larger than the diameter of the tubular electrode so that the jetted working fluid can cover the peripheral edge of the opening of the machined hole 31a. However, since the working fluid jet from the nozzle ends has a tendency to diffuse, there is no impediment even with a slightly smaller diameter than that.

In the illustrated embodiment, individual ends 41b and 42b of the first and second nozzles 41 and 42 are formed to have a working fluid jet angle of 45°. However, this working fluid jet angle is not restricted to 45°, it can be taken as a suitable value on a case-by-case.

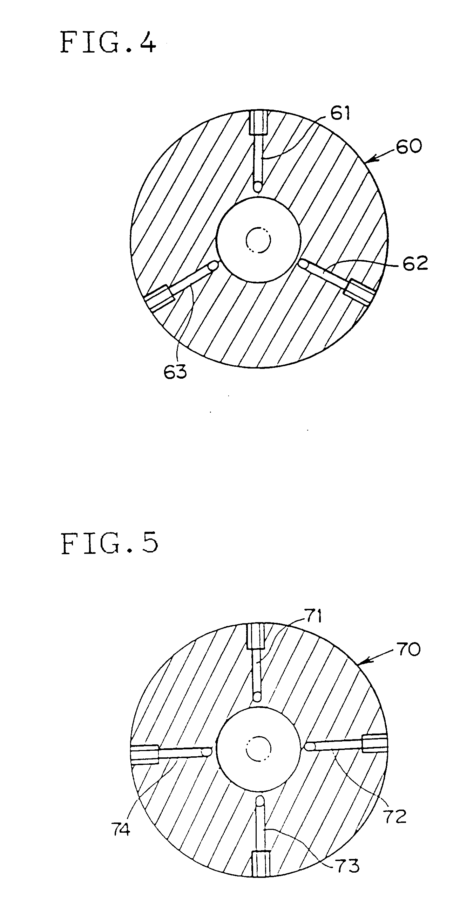

To prevent the deformation of the tubular electrode 15 by cancelling the working fluid pressure applied to the tubular electrode 15, for example, as shown in Figure 4, a working fluid jet nozzle device 60 provided with three nozzles 61, 62 and 63 of the same arrangement as nozzles 41 and 42 at intervals of 120° may be used instead of the working fluid jet nozzle device 40. Also, as shown in Figure 5, a working fluid jet nozzle device 70 provided with four nozzles 71, 72, 73 and 74 at intervals of 90° may be used.

Returning now to Figure 1, the device 50 for pressurizing and supplying the working fluid comprises a pressing pump 51 for pressurizing the working fluid 28 and a relief valve 52 connected in parallel to the pressing pump 51, and is arranged so that the working fluid at a pressure of at least 20 kg/cm² can be jetted toward the peripheral edge 31b of the opening of the machined hole 31a from the individual nozzles by the pressing pump 51.

According to the arrangement shown in Figure 1, the working fluid pressurized by the pressing pump 26 is supplied from the lower end of the tubular electrode 15 into the machining gap by the required pressure, and then, the electrical discharge machining is carried out under the condition wherein the working fluids exist in the machining gap and the distance therebetween is maintained at a suitable value by the electrode feeding device 35.

Machined chips resulted from the electrical discharge boring are carried away from the machining gap by the working fluid supplied thereinto through the tubular electrode 15. However, in the case of high speeds, it is infeasible to completely remove them only with the help of a jet of working fluid from the tubular electrode 15, also increasing the size of machined chips. The working fluid just spouted from the tubular electrode 15 can scatter the machined chips up from the machined surface. However, the influence of working fluid, that is, the pressure and speed will abate as it flows up through the gap between the machined hole 31a and the pipe electrode 15, so that the power to remove the machined chips will decrease and then chips will be more liable to be adhered to the workpiece at the opening or thereabouts. It is known that these chips will be magnetic. Therefore, when the workpiece is a magnetic material like iron, this magnetic force will also lead to the adherence of chips to the workpiece. This is the mechanism of the build-up of the fused adhesive substance. In the electrical discharge boring apparatus 10 of the present invention, the working fluid jet nozzle device 40 is provided for applying the high-pressure working fluid to the peripheral edge 31b of the opening of the machined hole 31a so that the adhesion of chips which have carried away from the machining gap to the edge around the opening is prevented, and besides, as shown in Figure 1, even if a fused adhesive substance C is built up on the peripheral edge 31b of the opening of the machined hole 31a, it is forcedly withdrawn from the workpiece by a jet of pressurized working fluid.

According to the experiments, when a working fluid pressure was 20 kg/cm² at nozzle points of the nozzle device 40, effect removing of the adherence of chips was recognized, and for example, when 40 kg/cm², almost complete prevention against the adherence of chips was recognized. Therefore, it was recognized that a working fluid pressure of at least 20 kg/cm² is required at nozzle points of the nozzle device 40 for preventing the build-up of a fused adhesive substance.

In embodiments of the invention, the build-up of the fused adhesive substance involved on boring relatively small holes by high-speed electrical discharge machining is restrained by providing a jet of pressurized working fluid. Therefore, a machined hole with no fused adhesive substance can be pierced in the workpiece without reducing the machining speed. Further, after the electrical discharge boring process is completed, no other process is required for withdrawing the fused adhesive from the peripheral edge of the opening of the machined hole. As a result, and particularly when machining small sized parts, a drastic cost reduction can be expected.

## Claims

1. An electrical discharge boring apparatus for boring a small hole in a workpiece (31) comprising means for repeatedly applying a machining pulse to a machining gap formed between the workpiece and a machining tubular electrode (15) through said tubular electrode, means for supplying a working fluid into the machining gap, and means for causing a predetermined relative feed motion to the tubular electrode, characterised in that a working fluid jet nozzle means (40) is provided which is adapted to spout the working fluid toward the peripheral edge (31b) of the inlet-side opening of the machined hole (31) formed by said tubular electrode, the working fluid jet nozzle means comprising a body (43) formed as a tubular member and having radial passages (41a,42a) extending from the peripheral cylindrical surface of the tubular member to its bottom surface, said passages opening at said bottom surface to form respective nozzles (41b,42b), and communicating at their respective other ends with the working fluid supply means (50), and wherein the working fluid supply means (50) is adapted to supply the working fluid to said jet nozzle means under a sufficient pressure such that the pressure of fluid at the nozzles is at least 20 kg/cm².

2. An electrical discharge boring apparatus as claimed in Claim 1, wherein the nozzles are radially equispaced.

3. An electrical discharge boring apparatus as claimed in any preceding claim wherein the working fluid supply means comprises a pump (51) for pressurizing the working fluid and a relief valve (52) in parallel to the pump.

## Patentansprüche

1. Funkenerosionsbohrvorrichtung zum Bohren kleiner Löcher in ein Werkstück (31), mit einer Vorrichtung zum wiederholten Anlegen eines Bearbeitungsimpulses an einem Bearbeitungsspalt zwischen dem Werkstuck und einer rohrförmigen Bearbeitungselektrode (15) über die hohle Elektrode, mit einer Vorrichtung zum Zuführen eines Arbeitsfluids in den Bearbeitungsspalt und mit einer Vorrichtung zum Ausüben einer vorbestimmten relativen Vorschubbewegung auf die rohrförmige Elektrode, **dadurch gekennzeichnet**, daß eine Arbeitsfluid-Einspritzdüsenvorrichtung vorgesehen ist, mit der das Arbeitsfluid zur Umfangskante (31b) der einlaßseitigen Öffnung des bearbeiteten Lochs (31), das durch die rohrförmige Elektrode gebildet ist, spritzbar ist, daß die Arbeitsfluid-Einspritzdüsenvorrichtung ein Gehäuse (43) aufweist, das als rohrförmiges Element ausgebildet ist und radiale Kanäle (41a, 42a) besitzt, die sich von der zylindrischen Umfangsfläche des rohrförmigen Elements zu dessen Bodenfläche hin erstrecken, wobei die Kanäle sich an der Bodenfläche öffnen und Düsen (41b, 42b) bilden und an ihren anderen Enden mit der Arbeitsfluid-Zuführvorrichtung (50) in Verbindung stehen, und daß die Arbeitsfluid-Zuführvorrichtung (50) das Arbeitsfluid der Einspritzdüsenvorrichtung unter einem ausreichenden Druck derart zufuhrt, daß der Fluiddruck an den Düsen mindestens 20 kg/cm² beträgt.

2. Funkenerosionsbohrvorrichtung nach Anspruch 1, dadurch gekennzeichnet, daß die Düsen radial in gleichmäßigem Abstand angeordnet sind.

3. Funkenerosionsbohrvorrichtung nach einem der vorhergehenden Ansprüche, dadurch gekennzeichnet, daß die Arbeitsfluid-Zuführvorrichtung eine Pumpe (51) zum unter Druck setzen des Arbeitsfluids und parallel zur Pumpe ein Entlüftungsventil (52) aufweist.

## Revendications

1. Dispositif de forage par électroérosion pour forer un trou de petite dimension dans une pièce (31), comportant un moyen pour appliquer de façon répétitive une impulsion d'usinage à un évidement d'usinage formé entre la pièce et une électrode tubulaire d'usinage (15) par ladite électrode, un moyen pour alimenter en un fluide de travail l'évidement d'usinage, et un moyen pour engendrer un mouvement d'avance relatif de l'électrode tubulaire, caractérisé en ce qu'il comporte un moyen à buse (40) pour le fluide de travail adapté pour éjecter le fluide de travail en direction du bord périphérique (31b) de l'ouverture d'entrée du trou usiné (31a) réalisé par ladite électrode tubulaire, le moyen à buse pour le fluide de travail comportant un corps (43) en forme d'organe tubulaire et ayant des passages radiaux (41a, 42a) s'étendant depuis la surface cylindrique périphérique de l'organe tubulaire vers sa surface de fond, lesdits passages débouchant à ladite surface de fond pour respectivement former des buses (41b, 42b), et communiquant à leurs autres extrémités avec le moyen d'alimentation (50) en fluide de travail, et dans lequel le moyen d'alimentation (50) en fluide de travail est adapté pour alimenter en fluide de travail ledit moyen à buse sous une pression suffisante pour que la pression du fluide dans les buses soit d'au moins 20 kg/cm².

2. Dispositif de forage par électroérosion selon la revendication 1, dans lequel les buses sont radialement équidistantes.

3. Dispositif de forage par électroérosion selon l'une des revendications précédentes, dans lequel le moyen d'alimentation en fluide de travail comporte une pompe (51) pour mettre sous pression le fluide de travail et une soupape de décharge (52) en parallèle avec la pompe.
